# EUROPÄISCHE PATENTSCHRIFT

(11) **EP 2 030 755 B1**
(45) Veröffentlichungstag und Bekanntmachung des Hinweises auf die Patenterteilung: **28.12.2011**
(21) Anmeldenummer: 08017864.3
(22) Anmeldetag: 02.11.2005
(51) Int. Cl.: B29C 45/16, B60K 15/035, F16L 47/28

(54) **Verfahren zur Herstellung eines Stutzens**
Method for manufacturing a support
Procédé de fabrication d'un manchon

(30) Priorität: 24.12.2004 DE 102004062587; 08.09.2005 DE 102005042678
(43) Veröffentlichungstag der Anmeldung: 04.03.2009
(62) Teilanmeldung aus: 05023834.4
(73) Patentinhaber: NORMA Germany GmbH, 63477 Maintal (DE)
(72) Erfinder: Kertesz, Janos, 65843 Sulzbach (DE)
(74) Vertreter: Knoblauch, Andreas

(56) Entgegenhaltungen:
- EP-A- 1 323 973
- DE-A1- 19 953 746
- DE-B1- 1 629 710
- DE-C1- 4 239 909
- GB-A- 2 267 678
- US-A1- 2001 013 675
- US-B1- 6 475 424

## Beschreibung

Die Erfindung betrifft ein Verfahren zur Herstellung eines Stutzens zum Verbinden einer Fluidleitung mit einem Behälter aus thermoplastischem Kunststoff nach dem Oberbegriff des Anspruchs 1.

Ein derartiges Verfahren ist aus der DE 199 53 746 C2 bekannt. Dort besteht die erste Materialanordnung aus zwei benachbarten dünnen Schichten und die zweite Materialanordnung aus einer äußeren Schicht, die dicker als die zweischichtige erste Materialanordnung ist und im wesentlichen die mechanische Festigkeit des Stutzens bestimmt. Die drei Schichten sollen im Koinjektions- oder Monosandwich-Verfahren gespritzt werden. Hierbei ist es jedoch äußerst schwierig, die einschichtige erste Materialanordnung erheblich dicker als die zweite Materialanordnung auszubilden, da dann zwei Schichten einer insgesamt dreischichtigen Wand eines Stutzens eine dünne ein- oder zweiteilige Hautschicht bilden, deren gesamte Wanddicke in der Regel geringer als die der Kernschicht ist. So hat die Hautschicht bei einer Koinjektion üblicherweise eine Dicke von maximal etwa 2 mm. Wenn dann die Wandstärke des Stutzens aus Festigkeitsgründen beispielsweise etwa 10 mm betragen und die dickste Schicht außen liegen soll, läßt sich eine solche Schichtanordnung praktisch nicht im Koinjektions- oder Monosandwich-Verfahren herstellen.

Andererseits lassen sich viele Materialien nicht in einem Spritzvorgang mehrschichtig spritzen, sei es im Koextrusionsverfahren oder unmittelbar nacheinander, solange die vorher gespritzte Schicht noch geschmolzen ist, z.B. zuerst eine Aluminium-Schicht und unmittelbar anschließend, solange die Aluminium-Schicht noch geschmolzen ist, eine Kunststoff-Schicht, weil Aluminium eine sehr viel höhere Schmelztemperatur als Kunststoff hat, der der Kunststoff nicht standhalten würde. Ähnliches gilt für Materialien mit unterschiedlichem Fließverhalten.

GB 2 267 678 A offenbart ein Verfahren zur Herstellung eines Stutzens, der eine rohrförmige, zweischichtige erste Materialanordnung und eine zweite stutzenförmige Materialanordnung aufweist. Die rohrförmige Form der ersten Materialanordnung wird dabei mittels Blasformen hergestellt. Die zweite Materialanordnung wird anschließend im Spritzgussverfahren um die erste Materialanordnung herum angeordnet. Die erste und die zweite Materialanordnung können dabei Nylon aufweisen. Nylon ist ein schweißbares Kunststoffmaterial. Durch das Aufbringen der zweiten Materialanordnung mittels Spritzgussverfahren könne die erste und die zweite Materialanordnung dabei eine Schmelzverbindung eingehen.

EP 1 323 973 A2 zeigt ein flüssigkeits- oder dampfführendes System mit einer Fügezone aus einem koextrudierten Mehrschichtverbund mit einem Anschlusselement und einem Hohlkörper, die mit Hilfe des koextrudierten Mehrschichtverbunds verbunden sind. Dabei kann das Anschlusselement die Form eines Stutzens aufweisen und ein- oder mehrschichtig ausgebildet sein. Der koextrudierte Mehrschichtverbund kann aus einer Folie, einer Platte oder einem Rohr beispielsweise durch Blasformen oder Tiefziehen hergestellt werden. Der koextrudierte Mehrschichtverbund kann anschließend mit dem Anschlusselement mittels Verschweißen oder durch ein Spritzgießverfahren zu verbinden.

Der Erfindung liegt die Aufgabe zugrunde, ein Verfahren der eingangs genannten Art anzugeben, bei dem die Dicke und relative Lage der Schichten bei vorgegebener Wandstärke des Stutzens unabhängig von der Funktion der Schichten weitgehend frei wählbar ist.

Diese Aufgabe wird durch ein Verfahren mit den Merkmalen des Anspruchs 1 gelöst.

Man kann die erste Materialanordnung als Vorformling dünner als die zweite Materialanordnung ausbilden.

Ferner kann die zweite Materialanordnung einschichtig sein, überwiegend PE oder PA aufweisen und weitgehend die gleiche Dicke wie die beiden Vorformlinge zusammen aufweisen oder dicker sein, um dem Stutzen die erforderliche Festigkeit und Steifigkeit zu verleihen.

Außerdem kann die zweite Materialanordnung zwischen den beiden Vorformlingen dreischichtig im Koinjektions- oder Monosandwich-Verfahren ausgebildet werden und ihre Hautschichten mit den Hautschichten der beiden Vorformlinge eine Schmelzverbindung eingehen.

Die Hautschichten der ersten Materialanordnung können ein PE und ihre Kernschicht eine Diffusionssperrschicht für Kohlenwasserstoffe aufweisen.

Auch die Hautschichten der zweiten Materialanordnung können ein PE aufweisen, und ihre Kernschicht kann eine Diffusionssperrschicht für Kohlenwasserstoffe oder Verstärkungsmaterial aufweisen.

Die Diffusionssperrschicht der zweiten Materialanordnung weist vorzugsweise PA oder EVOH auf, und die Kernschicht der zweiten Materialanordnung hat vorzugsweise weitgehend die gleiche Dicke wie ihre beiden Hautschichten zusammen oder ist dicker.

Bei einem anderen Verfahren zur Herstellung eines Stutzens zum Verbinden einer Fluidleitung mit einem thermoplastischen Kunststoff aufweisenden Behälter, wobei der Stutzen eine erste stutzenförmige, wenigstens einschichtige Materialanordnung und eine zweite stutzenförmige, wenigstens einschichtige Materialanordnung aufweist, von denen die erste Materialanordnung dünner als die zweite Materialanordnung ist und beide als zumindest überwiegenden Bestandteil thermoplastischen Kunststoff aufweisen und eine stoffschlüssige Schmelzverbindung miteinander eingehen, wird in einem ersten Schritt die eine der beiden Materialanordnungen in einer ersten Formwerkzeugkavität in einen Vorformling mit Stutzenkontur geformt, wobei in einem zweiten Schritt die andere der beiden Materialanordnungen in einer zweiten Formwerkzeugkavität an den ersten Vorformling angeformt wird, wobei der Kunststoff einer der beiden Materialanordnungen, die mit der Fluidleitung beim Verbinden in Berührung kommt, einen elektrisch leitfähigen Zusatz aufweist.

Bei dieser Lösung kann bereits im ersten Schritt der erste Vorformling und im zweiten Schritt der gesamte Stutzen geformt werden. Wenn die Fluidleitung zur Vermeidung einer elektrostatischen Aufladung beim Füllen des Behälters - zum Beispiel eines Tanks eines Kraftfahrzeugs mit einem Kohlenwasserstoff wie Benzin oder Dieselöl - über die Fluidleitung elektrisch leitend ist, wäre die gesamte Verbindung, bestehend aus der Fluidleitung und dem unmittelbar mit dem Behälter verbundenen Stutzen, gegen eine elektrostatische Aufladung geschützt.

Hierbei kann der Kunststoff der einen Materialanordnung für Kohlenwasserstoffe diffusionssperrfähig sein und der Kunststoff der anderen Materialanordnung mit dem Kunststoff des Behälters eine Schmelzverbindung eingehen.

Besonders günstig ist es dann, wenn der Kunststoff der dünneren Materialanordnung die Diffusionssperrfähigkeit aufweist. Da diffusionssperrfähige Kunststoffe, wie sie vorstehend aufgeführt sind, mit dem üblicherweise zumindest überwiegend PE aufweisenden Behälter keine Schmelzverbindung eingehen, wäre es ausreichend, wenn nur die mit dem PE des Behälters verschmelzbare dickere Materialanordnung die Verbindung mit dem Behälter eingeht, weil ihre Verbindungsfläche am behälterseitigen Ende des Stutzens entsprechend größer ist und daher eine sichere Verbindung ermöglicht.

Alternativ zur Verwendung von diffusionssperrfähigem Kunststoff für die eine, insbesondere die dünnere, Materialanordnung, kann in wenigstens eine der beiden Materialanordnungen eine für Kohlenwasserstoffe diffusionssperrfähige, sich über mehr als 50%, vorzugsweise mehr als 90%, der Länge der betreffenden Materialanordnung erstreckende Schicht im Koinjektions- oder Monosandwich-Verfahren eingespritzt werden und der Kunststoff der Materialanordnung oder jeder Materialanordnung, in die die diffusionssperrfähige Schicht eingespritzt wird, mit dem Behältermaterial eine Schmelzverbindung eingehen. Die diffusionssperrfähige Schicht kann sehr dünn ausgebildet sein, so daß auch diejenige Materialanordnung oder beide Materialanordnungen, die mit der diffusionssperrfähigen Schicht versehen ist bzw. sind, eine feste Schmelzverbindung mit dem Behälter eingeht bzw. eingehen.

Eine weitere Möglichkeit besteht bei dieser Lösung darin, daß die dickere Materialanordnung einen mit dem Behälter eine Schmelzverbindung eingehenden Kunststoff aufweist und die in sie eingespritzte, diffusionssperrfähige Schicht sich über weniger als 100% der Länge der dickeren Schicht erstreckt, und daß die dünnere Materialanordnung in dem zweiten Schritt an der gesamten Innenseite der dickeren Materialanordnung bis über das der mit dem Behälter zu verbindenden Fläche abgekehrte Ende der dickeren Materialanordnung hinaus angeschmolzen und zu einer über die Außenseite der dickeren Materialanordnung hinausgehenden Halterippe für die Fluidleitung geformt wird und den leitfähigen Zusatz aufweist. Die dickere Materialanordnung kann dann von leitfähigen Zusätzen, wie Teilchen aus Graphit, Metall oder Kohlenstoff, zum Beispiel Ruß, oder einem Zusatz aus elektrisch leitfähigen, sogenannten Nano-Röhrchen, die keine Schmelzverbindung mit dem Behälter eingehen, aber ein verhältnismäßig großes Verhältnis von Länge zu Durchmesser haben, so daß sie eine durch den gesamten Stutzen hindurchgehende elektrisch leitfähige Verbindung sicherstellen, freigehalten werden. Ferner bleibt die mit dem Behälter zu verbindende Fläche der dickeren Materialanordnung verhältnismäßig groß, so daß sie mit dem Behälter eine feste Verbindung eingeht.

Vorzugsweise ist dafür gesorgt, daß beide Materialanordnungen PE aufweisen, daß in das PE wenigstens einer der beiden Materialanordnungen eine erste Schicht im Koinjektions- oder Monosandwich-Verfahren eingespritzt wird, die mit PE und einem für Kohlenwasserstoffe diffusionssperrfähigen Kunststoff eine Schmelzverbindung eingeht, und daß in die erste Schicht eine zweite Schicht im Koinjektions- oder Monosandwich-Verfahren eingespritzt wird, die den für Kohlenwasserstoffe diffusionssperrfähigen Kunststoff aufweist. Auf diese Weise ist sichergestellt, daß der Diffiusions- oder der bei höheren Temperaturen entstehende Dampfdruck des durch das PE hindurchdiffundierenden Kohlenwasserstoffs, wie Kraftstoff in Form von Benzin oder Dieselöl, das PE nicht von der diffusionssperrfähigen Schicht abheben kann, so daß es schließlich abblättern würde. Desgleichen würde auch das unterschiedliche Quellverhalten der diffusionssperrfähigen Schicht und des PE nicht dazu führen, daß sich das PE von der diffusionssperrfähigen Schicht abhebt. Soweit die diffusionssperrfähige Schicht nur oder auch in der radial außen liegenden Materialanordnung des Stutzen eingespritzt wird, würde durch die Ausbildung einer Schmelzverbindung zwischen der diffusionssperrfähigen Schicht und dem sie umgebenden PE die Gefahr vermieden, daß das PE durch mechanische Kräfte von der diffusionssperrfähigen Schicht abgehoben und entfernt wird.

Um zwischen der ersten Schicht und dem Polyethylen der betreffenden Materialanordnung sowie der diffusionssperrfähigen Schicht eine möglichst fest Schmelzverbindung zu erzielen, ist es vorteilhaft, wenn der für Kohlenwasserstoffe diffusionssperrfähige Kunststoff PA oder EVOH ist und die erste Schicht ein mittels Maleinsäureanhydrid haftungsmodifiziertes PE aufweist und, wenn der diffusionssperrfähige Kunststoff PA ist, dessen Aminoendgruppenkonzentration gleich oder größer als 40 Milliäquivalent pro Kilogramm ist.

Auch bei dieser Ausbildung ist es günstig, wenn sich die erste und die zweite Schicht der einen Materialanordnung über mehr als 50%, vorzugsweise mehr als 90%, der Länge dieser Materialanordnung erstrecken. Die Diffusionssperrfähigkeit des Stutzens ist dann über einen sehr großen Teil der Länge des Stutzens sichergestellt.

Wenn sich hierbei die erste und die zweite Schicht der dickeren Materialanordnung über weniger als 100%, aber weiterhin über mehr als 50%, vorzugsweise mehr als 90%, der Länge der dickeren Materialanordnung erstrecken, wird auch bei dieser Ausbildung des Stutzens eine relativ große Verbindungsfläche zwischen der dickeren Materialanordnung und dem Behälter sichergestellt und dadurch eine feste Verbindung zwischen dem Stutzen und dem Behälter erreicht.

In Fällen, in denen keine sehr hohen Anforderungen an die Diffusionssperrfähigkeit des Stutzens gestellt werden, können die erste und die zweite einschichtige Materialanordnung aus Kunststoffen bestehen, die nicht nur miteinander, sondern auch mit dem Behälter eine stoffschlüssige Schmelzverbindung eingehen. Dabei braucht dann wiederum nur die eine Materialanordnung den elektrisch leitfähigen Zusatz aufzuweisen, vorzugsweise die radial innere Materialanordnung, die dünner als die radial äußere Materialanordnung sein kann. Wenn der Behälter PE oder HDPE aufweist, können beide Materialanordnungen ebenfalls überwiegend PE aufweisen.

Da nur die eine Materialanordnung den leitfähigen Zusatz aufweist, kann dann der gesamte Stutzen trotz des die Materialkosten erhöhenden leitfähigen Zusatzes kostengünstiger als bei einschichtiger Ausbildung des gesamten Stutzens mit einem leitfähigen Zusatz hergestellt werden. Die andere Materialanordnung hat dann wegen des fehlenden leitfähigen Zusatzes eine höhere Chemikalienbeständigkeit und Spannungsrißbeständigkeit. Da beide Materialanordnungen auch mit dem Behälter eine stoffschlüssige Schmelzverbindung eingehen, kann der geschmolzene Kunststoff der leitfähigen Materialanordnung nicht zwischen die andere Materialanordnung und den Behälter eindringen und deren Verbindung mit dem Behälter beeinträchtigen.

Ferner sollte im ersten Schritt die dickere Materialanordnung geformt werden. Die dickere Materialanordnung bestimmt dann nicht nur die mechanische Festigkeit des Stutzens und seiner Verbindung mit dem Behälter, sofern sie keinen elektrisch leitfähigen Zusatz aufweist, sondern bildet gleichzeitig auch den Träger für die dünnere und damit weniger mechanisch belastbare Materialanordnung.

Die Erfindung und ihre Weiterbildungen werden nachstehend anhand der beiliegenden Zeichnungen bevorzugter Ausführungsbeispiele näher beschrieben. Darin stellen dar:
- Fig. 1: einen nach einem ersten Ausführungsbeispiel hergestellten Stutzen,
- Fig. 2: einen nach einem zweiten Ausführungsbeispiel hergestellten Stutzen,
- Fig. 3: einen nach einem dritten Ausführungsbeispiel des erfindungsgemäßen Verfahrens hergestell- ten Stutzen,
- Fig. 4: einen nach einem vierten Ausführungsbeispiel hergestellten Stutzen,
- Fig. 5: einen nach einem fünften Ausführungsbeispiel hergestellten Stutzen,
- Fig. 6: einen nach einem sechsten Ausführungsbeispiel des erfindungsgemäßen Verfahrens hergestell- ten Stutzen,
- Fig. 7: einen nach einem siebten Ausführungsbeispiel hergestellten Stutzen,
- Fig. 8: einen nach einem achten Ausführungsbeispiel hergestellten Stutzen,
- Fig. 9: einen nach einem neunten Ausführungsbeispiel hergestellten Stutzen,
- Fig. 10: einen nach einem zehnten Ausführungsbeispiel eines erfindungsgemäßen Verfahrens herge- stellten Stutzen,
- Fig. 11: einen nach einem elften Ausführungsbeispiel des erfindungsgemäßen Verfahrens hergestell- ten Stutzen,
- Fig. 12: einen nach einem zwölften Ausführungsbeispiel hergestellten Stutzen,
- Fig. 13: einen nach einem dreizehnten Ausführungsbei- spiel hergestellten Stutzen,
- Fig. 14: einen nach einem vierzehnten Ausführungsbei- spiel des erfindungsgemäßen Verfahrens herge- stellten Stutzen,
- Fig. 15: einen nach einem fünfzehnten Ausführungsbei- spiel hergestellten Stutzen,
- Fig. 16: einen nach einem sechzehnten Ausführungsbei- spiel des erfindungsgemäßen Verfahrens herge- stellten Stutzen,
- Fig 17: einen nach einem siebzehnten Ausführungsbei- spiel des erfindungsgemäßen Verfahrens herge- stellten Stutzen,
- Fig 18: einen nach einem achtzehnten Ausführungsbei- spiel des erfindungsgemäßen Verfahrens herge- stellten Stutzen und
- Fig 19: einen nach einem neunzehnten Ausführungsbei- spiel des erfindungsgemäßen Verfahrens herge- stellten Stutzen.

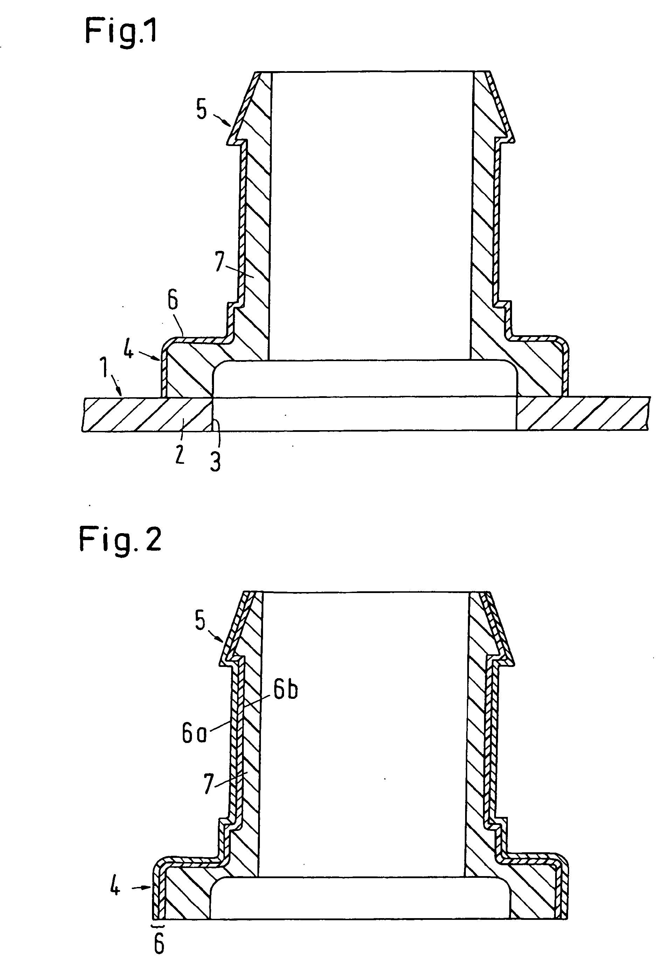

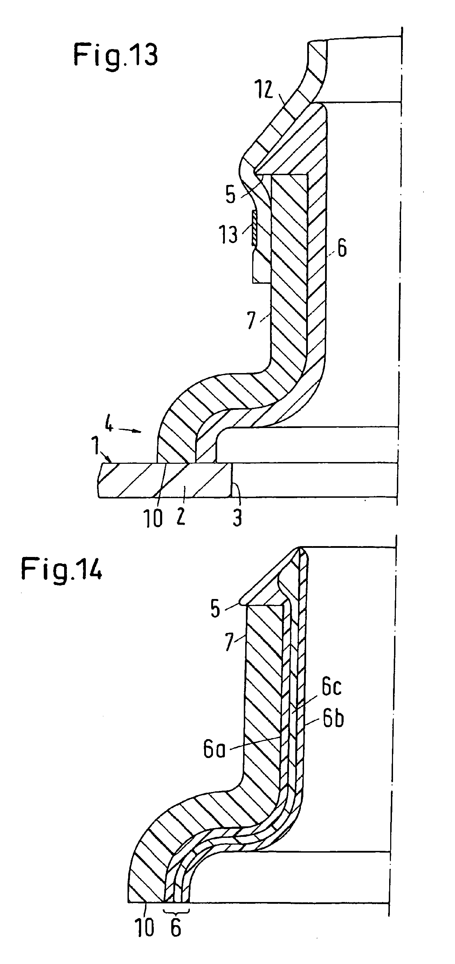

Die Fig. 1-2, 4, 5, 7-9, 12, 13 und 15 dienen nur der Veranschaulichung. Die in den Fig. 1 bis 12 dargestellten Stutzen sind mehrschichtig aufgebaut und dienen zum Verbinden einer (nur in Fig. 13, 15 und 18 dargestellten) Fluidleitung, z.B. eines Schlauches aus diffusionsdichtem Kunststoff, mit einem überwiegend aus Kunststoff bestehenden Behälter 1 für Kohlenwasserstoffe, hier einem Kraftfahrzeug-Tank für Benzin oder Dieselöl, von dem nur eine Wand 2 mit einer Einfüllöffnung 3 dargestellt ist. Die Fluidleitung kann zusätzlich einen elektrisch leitenden Zusatz gegen eine elektrostatische Aufladung aufweisen. Jeder Stutzen besteht ebenfalls zumindest überwiegend aus thermoplastischem Kunststoff und wird stoffschlüssig mit dem Rand der Einfüllöffnung 3 verbunden, hier verschweißt, so daß sich eine Schmelzverbindung zwischen Stutzen und Behälter 1 ergibt. Bei jedem Stutzen ist der behälterseitige Endabschnitt mit einem umlaufenden Flansch 4 und der dem Behälter 1 abgewandte Endabschnitt mit einer umlaufenden Halterippe 5 versehen. In dem Bereich zwischen Flansch 4 und Halterippe 5 nach den Fig. 1 bis 12 ist der Stutzen etwas dünner. Beim Anschließen der Fluidleitung wird diese bis auf den dünneren Bereich über die Halterippe 5 hinweg auf den Stutzen geschoben und in diesem Bereich mittels einer Schlauchschelle festgeklemmt.

Während der Behälter 1 im wesentlichen HDPE (hochdichtes Polyethylen) mit einer für Kohlenwasserstoffe diffusionssperrfähigen (nicht dargestellten) Zwischenschicht aus PA oder EVOH aufweist, weist der Stutzen nach Fig. 1 außen eine einschichtige erste Materialanordnung 6 auf, die überwiegend aus thermoplastischem Kunststoff besteht, hier einem der diffusionssperrfähigen Materialien PA, EVOH, PET, PBT, PBN, PEN, POM, Fluorthermoplast, PPS. Innen weist der Stutzen eine zweite einschichtige Materialanordnung 7 auf, die ebenfalls überwiegend aus thermoplastischem Kunststoff besteht, hier PE, der mit dem Kunststoff des Behälters 1 und der ersten Materialanordnung 6 kompatibel, d.h. verschweißbar, ist und eine Schmelzverbindung eingeht. Soweit erforderlich, kann die zweite Materialanordnung 7 zur Erzielung der Schmelzverbindung entsprechend haftungsmodifiziert sein. Der thermoplastische Kunststoff der ersten Materialanordnung 6 kann zusätzlich elektrisch leitfähige Teilchen, z.B. aus Graphit oder Metall, aufweisen. Die zweite Materialanordnung 7 ist dagegen vorzugsweise verstärkt, z.B. mit Glas- oder Kohlefasern.

Der Stutzen nach Fig. 1 wird in der Weise hergestellt, daß in einem ersten Schritt die erste Materialanordnung 6 im Extrusions- oder Spritzgußverfahren zu einer ebenen Folie oder Platte oder zu einem Schlauch geformt wird, daß in einem zweiten Schritt die Folie oder Platte durch Tiefziehen oder der Schlauch durch Blasformen in einen ersten Vorformling mit Stutzenkontur geformt wird, daß in einem dritten Schritt auf der einen Seite des ersten Vorformlings die zweite Materialanordnung 7 im Spritzgußverfahren mit Stutzenkontur aufgebracht wird, und daß im Fall des aus der Folie oder Platte gebildeten ersten Vorformlings dessen Boden vor, in oder nach dem dritten Schritt herausgeschnitten wird.

Beide Materialanordnungen 6 und 7 können hierbei, unter Einhaltung der gewünschten Wandstärke des Stutzens, unterschiedlich dick, d.h. z.B. die erste Materialanordnung 6 sehr dünn, wie es für eine Diffusionssperrschicht ausreichend ist, und die zweite Materialanordnung 7 entsprechend dick gewählt werden, so daß sie als Träger für die erste Materialanordnung 6 und zur Erzielung der gewünschten Festigkeit des Stutzens und seiner Verbindung mit dem Behälter 1 dienen kann.

Ein besonderer Vorteil dieses Verfahrens besteht darin, daß auf diese Weise auch Materialanordnungen miteinander verbunden werden können, die sich nicht in nur einem Spritzvorgang (im Koextrusionsverfahren) verbinden lassen, z.B. eine axial durchgehende Metallschicht mit einer Kunststoffschicht, wegen ihrer sehr unterschiedlichen Schmelztemperaturen. Metall hat eine sehr viel höhere Schmelztemperatur als thermoplastischer Kunststoff, so daß der Kunststoff bei der höheren Schmelztemperatur des Metalls zersetzt würde.

Bei dem Ausführungsbeispiel nach Fig. 2 besteht die erste Materialanordnung 6 dagegen aus einer ersten Schicht 6a und einer zweiten Schicht 6b, die eine Schmelzverbindung eingehen, im Koextrusionsverfahren oder Schicht für Schicht im Spritzgußverfahren übereinandergeschichtet werden, um die Folie, die Platte oder den Schlauch zu bilden, und dann wiederum - im Falle der ebenen Folie oder Platte - tiefgezogen bzw. - im Falle des Schlauches - blasgeformt werden, um den stutzenförmigen ersten Vorformling zu bilden. Der erste Vorformling wird dann wiederum mit der zweiten Materialanordnung 7 in der gleichen Weise wie bei dem Ausführungsbeispiel nach Fig. 1 hinterspritzt. Die Dickenverhältnisse können ähnlich dem ersten Ausführungsbeispiel gewählt werden. Während die Materialien der zweiten Materialanordnung 7 wiederum so wie bei dem ersten Ausführungsbeispiel gewählt werden, sind die Materialien der Schichten 6a und 6b der ersten Materialanordnung 6 unterschiedlich gewählt, wobei die äußere Schicht 6a wiederum als Diffusionssperrschicht aus den gleichen Materialien wie die erste Materialanordnung 6 nach Fig. 1 und die mittlere Schicht 6b aus einem Haftvermittler ausgebildet werden kann. Es ist aber auch möglich, die Schicht 6b als Diffusionssperrschicht und die äußere Schicht 6a beispielsweise aus PE oder PA herzustellen, wobei die mittlere Schicht 6b wiederum mit den Schichten 6a und 7 kompatibel (verschmelzbar) sein muß.

Statt die erste Materialanordnung 6 aus den Schichten 6a und 6b durch Tiefziehen oder Blasformen zu dem ersten Vorformling zu formen, ist es auch möglich, den ersten Vorformling aus den Schichten 6a und 6b im Mehrkomponenten-Spritzgußverfahren (eine Schicht nach der anderen) in einem Formwerkzeug herzustellen.

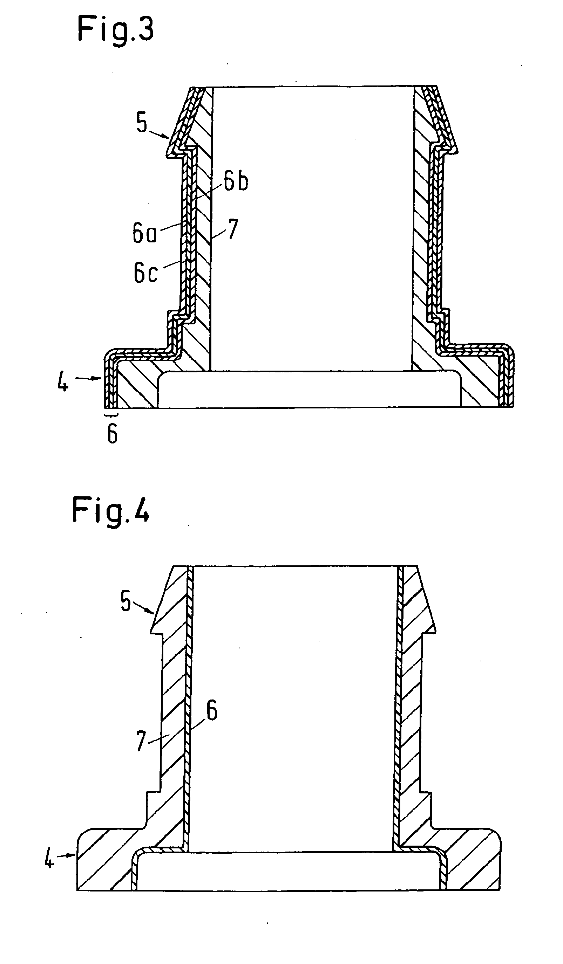

Bei dem Ausführungsbeispiel nach Fig. 3 besteht die erste Materialanordnung 6 aus drei Schichten 6a-6c, deren Materialien so gewählt werden, daß sie mit der jeweils benachbarten Schicht eine Schmelzverbindung eingehen. Desgleichen geht die Schicht 6b eine Schmelzverbindung mit der zweiten Materialanordnung 7 ein. Die Schichten 6a-6c werden zunächst im Koextrusions-Spritzgußver-fahren oder Schicht für Schicht im Spritzgußverfahren zu einer ebenen Folie oder Platte oder einem Schlauch übereinandergeschichtet. Aus dieser Schichtanordnung wird dann wiederum der erste Vorformling durch Tiefziehen oder Blasformen gebildet, der dann in einer Spritzgußform angeordnet und mit der zweiten Materialanordnung 7 hinterspritzt wird. Aus dem tiefgezogenen, napfartigen ersten Vorformling wird vor, während oder nach dem Hinterspritzen der zweiten Materialanordnung 7 der Boden herausgeschnitten.

Die Schichten 6a-6c sind insgesamt höchstens ebenso dick wie die zweite Materialanordnung 7, wenn die Wandstärke des Stutzens wiederum nur gleich der des ersten Ausführungsbeispiels ist. Von den drei Schichten 6a-6c bestehen wenigstens zwei aus unterschiedlichen Materialien, wobei eine mit der zweiten Materialanordnung 7 verschmelzbar ist. Beispielsweise ist die radial äußere Schicht 6c durch einen Zusatz elektrisch leitfähig, die mittlere Schicht 6a eine Sperrschicht und die radial innere Schicht 6b ein Haftvermittler, der die Verbindung zwischen der mittleren Schicht 6a und der zweiten Materialanordnung 7 ermöglicht, die wiederum PE aufweist, um sie mit dem Behälter 1 durch Anschmelzen verbinden zu können, aber mit einer Sperrschicht als mittlerer Schicht 6a, die beispielsweise PA oder EVOH aufweist, keine Schmelzverbindung eingeht, sofern das PE der zweiten Materialanordnung 7 nicht so haftungsmodifiziert ist, daß es mit PA oder PE eine Schmelzverbindung eingeht.

Alternativ kann auch die äußere Schicht 6c haftungsmodifiziertes PE, die mittlere Schicht 6a wiederum PA oder EVOH und die zweite Materialanordnung 7 ebenfalls haftungsmodifiziertes PE aufweisen. Das PE der äußeren Schicht 6c würde dann bei gleicher Gesamtwandstärke die gegenüber dem zweiten Ausführungsbeispiel nach Fig. 2 etwas geringere Dicke der zweiten Materialanordnung 7 zur Erzielung der gleichen Festigkeit des Stutzens ausgleichen.

Bei dem Ausführungsbeispiel nach Fig. 4 sind die beiden Materialanordnungen 6 und 7 gegenüber denen nach Fig. 1 vertauscht. D.h., die erste Materialanordnung 6 ist radial innen und die zweite Materialanordnung außen angeordnet, während die Herstellung in der gleichen Weise wie bei dem ersten Ausführungsbeispiel nach Fig. 1 erfolgt: Zuerst wird die Materialanordnung 6 als erster Vorformling aus einer ebenen Folie oder Platte durch Tiefziehen oder aus einem Schlauch durch Blasformen hergestellt. Um den ersten Vorformling wird dann die zweite Materialanordnung 7 im Spritzgußverfahren außen herumgespritzt, wobei der Boden der tiefgezogenen Form vor, während oder nach dem Herumspritzen der zweiten Materialanordnung 7 herausgeschnitten wird. Die Materialien der beiden Materialanordnungen 6 und 7 können wieder die gleichen wie bei dem ersten Ausführungsbeispiel sein.

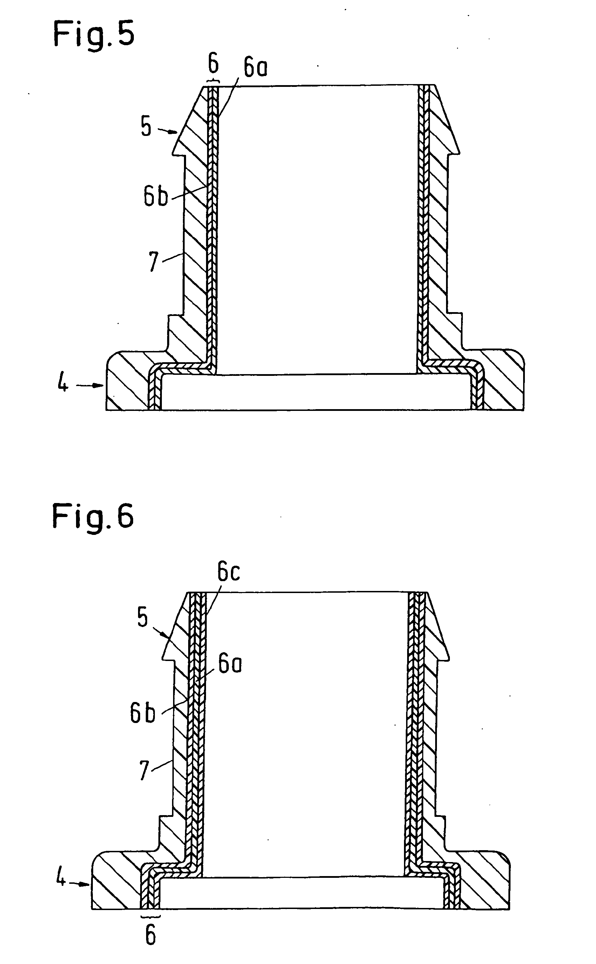

Auch bei dem Ausführungsbeispiel nach Fig. 5 ist lediglich die Lage der beiden Materialanordnungen 6 und 7 gegenüber der beim ersten und zweiten Ausführungsbeispiel vertauscht. Die Herstellung und die Materialien sind aber wieder die gleichen wie bei dem zweiten Ausführungsbeispiel.

Bei dem Ausführungsbeispiel nach Fig. 6 ist ebenfalls nur die Reihenfolge der Materialien 6 und 7 gegenüber der nach Fig. 3 vertauscht, während das Herstellungsverfahren und die Materialien der Materialanordnungen 6 und 7 gegenüber Fig. 3 gleichgeblieben sind.

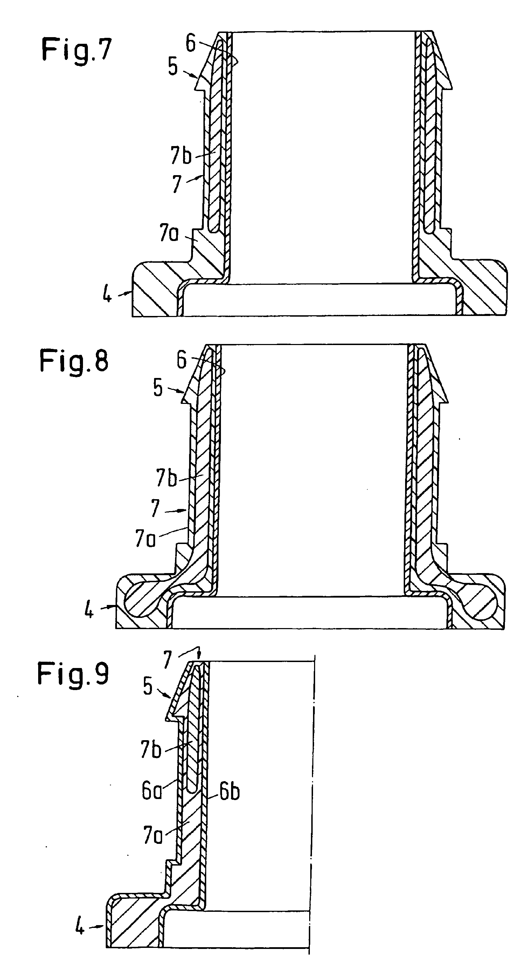

Bei dem Ausführungsbeispiel nach Fig. 7 ist die Reihenfolge der Materialien 6 und 7 ebenfalls gegenüber der nach Fig. 1 vertauscht. Die zweite Materialanordnung 7 besteht jedoch aus zwei Schichten, einer Hautschicht 7a und einer Kernschicht 7b, die in die noch plastische Seele der Hautschicht 7a im Koinjektions- oder Monosandwich-Verfahren eingespritzt wird, nachdem die Hautschicht 7a um die den ersten, ebenso wie bei dem ersten Ausführungsbeispiel hergestellten Vorformling bildende Materialanordnung 6 im Spritzgußverfahren herumgespritzt worden ist. Die Kernschicht 7b kann ein Verstärkungsmaterial, z.B. Glas- oder Kohlefasern, aufweisen oder, wenn die innere Materialanordnung 6 eine Diffusionssperrschicht aus beispielsweise PA oder EVOH bildet, eine zusätzliche Sperrschicht bilden.

Die Kernschicht 7b erstreckt sich aus dem Endabschnitt mit der Halterippe 5 des Stutzens über den dünneren mittleren Bereich des Stutzens bis an den Flansch 4, um bei Ausbildung der Kernschicht 7b als Verstärkungsschicht den mittleren, etwas dünneren Bereich gegenüber dem Einspanndruck der Schlauchschelle höher belastbar auszubilden. Die Kernschicht 7b kann alternativ aber auch als zusätzliche Diffusionssperrschicht ausgebildet sein, wenn die erste Materialanordnung 6 ebenfalls als Diffusionssperrschicht ausgebildet ist, um die Diffusionssperrfähigkeit des Stutzens zu erhöhen.

Das Ausführungsbeispiel nach Fig. 8 unterscheidet sich von dem nach Fig. 7 nur dadurch, daß die Kernschicht 7a länger ausgebildet ist, so daß sie sich bis in den Flansch 4 erstreckt, um die Festigkeit oder Diffusionssperrfähigkeit des Stutzens noch weiter zu erhöhen.

Bei dem Ausführungsbeispiel nach Fig. 9 weist die erste Materialanordnung 6 eine erste Schicht 6a und eine zweite Schicht 6b auf, die jeweils nach dem gleichen Verfahren wie der erste Vorformling aus der ersten Materialanordnung 6 bei dem Ausführungsbeispiel nach Fig. 1 in dem ersten und zweiten Schritt zu einem ersten Vorformling und einem zweiten Vorformling geformt werden. Die beiden Vorformlinge 6a und 6b werden dann mit einem der gewünschten Dicke der zweiten Materialanordnung entsprechenden Abstand zueinander in einem passend geformten Spritzguß-Formwerkzeug angeordnet, und dann wird eine erste Schicht 7a der zweiten Materialanordnung 7 im Spritzgußverfahren zwischen den ersten Vorformling und den zweiten Vorformling, d.h. zwischen die Schichten 6a und 6b, gespritzt und in die noch plastische Seele der ersten Schicht 7a der zweiten Materialanordnung 7 eine dritte Schicht 7b der zweiten Materialanordnung 7 im Koinjektions- oder Monosandwich-Verfahren gespritzt.

Hierbei kann die äußere Schicht 6a thermoplastisches Material mit elektrisch leitenden Teilchen und die innere Schicht 6b diffusionssperrfähiges PA oder EVOH aufweisen, während die Schicht 7a modifiziertes PE und die mittlere Schicht 7b wiederum Verstärkungsmaterial aufweisen kann, aber alle aneinandergrenzenden Schichten miteinander verschmelzbar sein können. Da die Schicht 7b im Material der Schicht 7a eingeschlossen ist, ist es jedoch nicht zwangsläufig erforderlich, daß die Schicht 7b mit der Schicht 7a verschmelzbar (kompatibel) ist. Ferner kann die Schicht 7b axial weiter, z.B. bis an oder in den Flansch 4, eingespritzt werden.

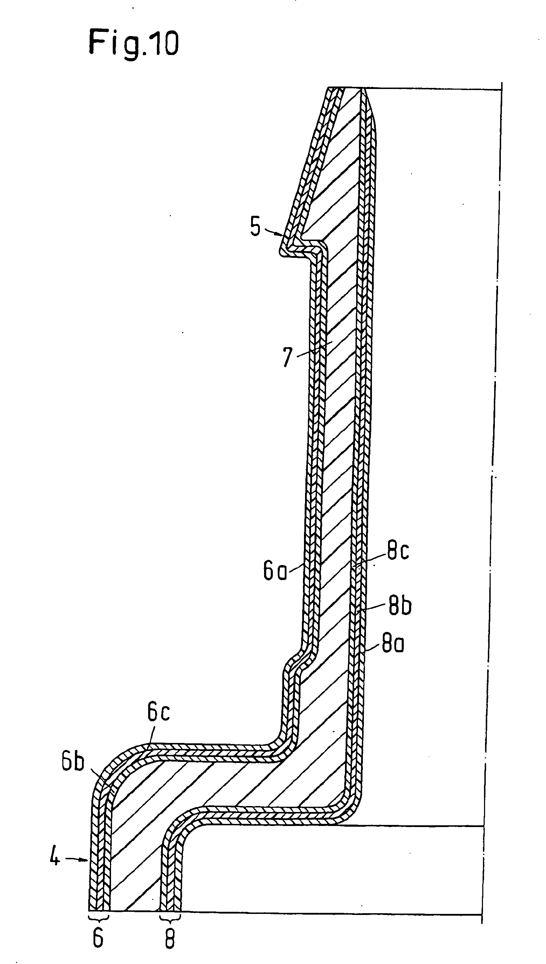

Bei dem Ausführungsbeispiel nach Fig. 10, von dem nur eine Hälfte dargestellt ist, weil die andere wie bei den vorhergehenden Ausführungsbeispielen symmetrisch zu der einen Hälfte ist, ist der Stutzen aus einer ersten stutzenförmigen Materialanordnung 6, die drei Schichten 6a, 6b und 6c aufweist, einer zweiten stutzenförmigen, jedoch einschichtigen Materialanordnung 7 und aus einer dritten stutzenförmigen Materialanordnung 8 mit drei Schichten 8a, 8b und 8c hergestellt. Alle Anordnungen bestehen zumindest überwiegend aus thermoplastischem Kunststoff.

Die erste Materialanordnung 6 wird im Koinjektions- oder Monosandwich-Verfahren als erster Vorformling hergestellt, so daß ihre äußeren Schichten 6a und 6b eine Hautschicht bilden und ihre innere Schicht 6c eine Kernschicht bildet, die etwa ebenso dick bis etwa doppelt so dick wie jede der Schichten 6a und 6b ist.

Die Schichten 6a und 6b weisen PE auf, während die Schicht 6c ein PA oder EVOH aufweist und eine Diffusionssperrschicht für Kohlenwasserstoffe bildet. Die zweite Materialanordnung 7 weist ebenfalls PE auf, so daß sie mit der Schicht 6b eine Schmelzverbindung eingeht.

Die dritte Materialanordnung 8 wird ebenfalls im Koinjektions- oder Monosandwich-Verfahren als zweiter Vorformling hergestellt, so daß ihre äußeren Schichten 8a und 8c eine Hautschicht bilden und ihre innere Schicht 8b eine Kernschicht bildet. Die Schichten 8a, 8c weisen ebenfalls PE auf, während die innere Schicht 8b ein PA oder EVOH aufweist, so daß letztere eine Diffusionssperrschicht für Kohlenwasserstoffe bildet. Mithin geht auch die Schicht 8c mit der Materialanordnung 7 eine Schmelzverbindung ein, da sie beide PE aufweisen. Während die Schichten 8a und 8c etwa gleich dick sind, ist die Schicht 8b etwa ebenso dick bis doppelt so dick wie eine der Schichten 8a, 8c. Dies ist ebenso wie bei der Schicht 6c dadurch möglich, daß die maximale Dicke der Materialanordnungen 6 und 8 durch entsprechend dünne Ausbildung der Kavität des Formwerkzeugs, in dem das Koinjektions- bzw. Monosandwich-Verfahren zur Herstellung der Materialanordnungen 6 und 8 ausgeführt wird, gleich dem 2- bis 4-fachen der Hautschichten gewählt wird, deren Dicke bei einem Koinjektions- bzw. Monosandwich-Verfahren in der Regel konstant bei 1 bis 2 mm liegt.

Alternativ können die Materialanordnungen 6 und 8 jedoch auch im Koextrusions-Spritzgußverfahren oder ihre Schichten nacheinander Schicht für Schicht im Extrusions-Spritzgußverfahren übereinander zu einer Folie oder Platte oder einem Schlauch gespritzt und dann die Folie oder Platte durch Tiefziehen oder der Schlauch durch Blasformen zu dem ersten bzw. zweiten Vorformling geformt werden, wonach die beiden Vorformlinge dann wiederum mit einem Zwischenraum zwischen sich in einer entsprechend geformten Spritzgußform angeordnet werden und die zweite Materialanordnung 7 in den Zwischenraum gespritzt wird. Im Falle der tiefgezogenen Vorformlinge kann ihr Boden wiederum vor, während oder nach dem Einspritzen der zweiten Materialanordnung 7 herausgeschnitten werden, um die an beiden Enden offene Stutzenform zu erhalten. Ferner ist es möglich, bei dem Ausführungsbeispiel nach Fig. 10 die erste Materialanordnung 6 oder die dritte Materialanordnung 8 wegzulassen.

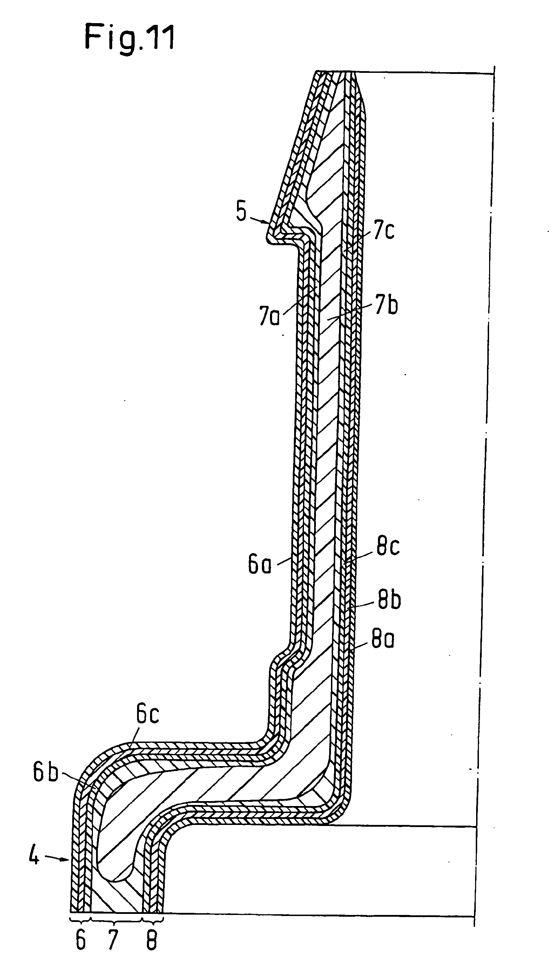

Bei der Ausführungsform nach Fig. 11 können nicht nur die Materialanordnungen 6 und 8 wie bei dem Ausführungsbeispiel nach Fig. 10 im Koinjektions- oder Monosandwich-Verfahren, sondern auch die zweite Materialanordnung 7 nach der Fertigstellung des ersten und zweiten Vorformlings in einem Formwerkzeug in den Zwischenraum zwischen diesen beiden Vorformlingen im Koinjektions- oder Monosandwich-Verfahren gespritzt werden, so daß die äußeren Schichten 7a und 7c der zweiten Materialanordnung 7 ebenfalls eine Hautschicht aus PE bilden und die innere Schicht 7b eine Kernschicht aus PA als Diffusionssperrschicht und Trägerschicht bildet. Dagegen bildet die erste Materialanordnung 6 beiderseits der Kernschicht 6c eine Hautschicht, die PA aufweist, und eine Kernschicht 6c, die EVOH aufweist, und mithin eine weitere Diffusionssperrschicht. Die dritte Materialanordnung 8 kann dann Hautschichten 8a und 8c aus PE und eine Kernschicht 8b aus EVOH als zusätzliche Diffusionssperrschicht aufweisen.

Da die PA aufweisende Kernschicht 7b der zweiten Materialanordnung 7 nicht vollständig, wie dargestellt, bis an das untere, am Behälter 1 anzuschweißende Ende des die Hautschicht(en) 7a und 7c bildenden PE in das PE hineingespritzt ist, ist eine hinreichend große Fläche aus PE vorhanden, die eine feste Schweiß- bzw. Schmelzverbindung mit dem PE des Behälters 1 eingehen kann. Auch hier können die Dickenverhältnisse der Schicht so gewählt werden, daß die Haut- und Kernschichten der Materialanordnungen 6 und 8, unter Einhaltung der erforderlichen Wandstärke des Stutzens, etwa gleich dünn sind, dagegen die Trägerschicht 7b relativ dick, etwa ebenso dick wie ihre Hautschicht(en) 7a, 7c (zusammen) oder dicker ist.

Desgleichen kann auch in diesem Fall die erste Materialanordnung 6 oder die dritte Materialanordnung 8 weggelassen werden.

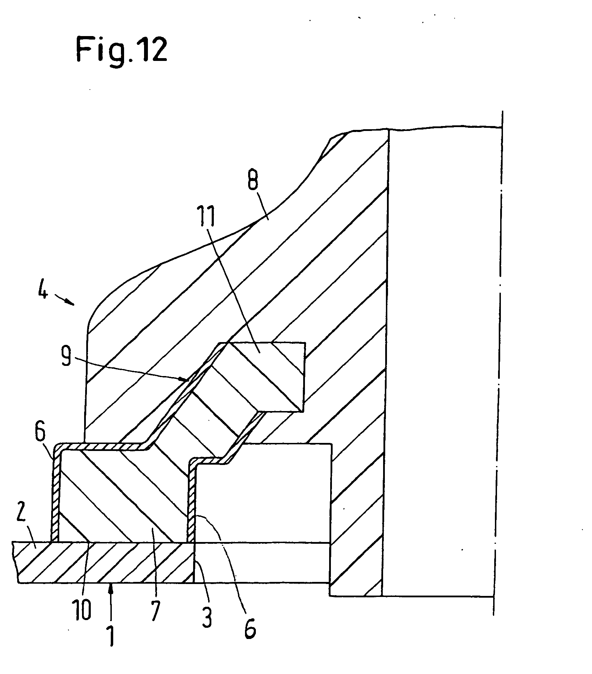

Fig. 12 stellt die eine Hälfte eines Flansches 4 eines nach einem weiteren Ausführungsbeispiel eines erfindungsgemäßen Verfahrens hergestellten Stutzens im Axialschnitt dar. Der nicht dargestellte, dem Behälter 1 abgewandte Teil ist ebenfalls mit einer Halterippe, wie bei den vorhergehenden Ausführungsbeispielen, versehen. Der Stutzen hat ebenfalls eine erste Materialanordnung 6, die radial außerhalb oder innerhalb oder, wie dargestellt, auf beiden Seiten einer zweiten Materialanordnung 7 liegt, und eine dritte Materialanordnung 8, die wie bei den zuvor beschriebenen Stutzen überwiegend aus thermoplastischem Kunststoff bestehen. Die erste Materialanordnung 6 ist einschichtig und hat eine relativ geringe Dicke. Sie umgibt die wesentlich dickere zweite Materialanordnung 7. Die dritte Materialanordnung 8 umgibt einen Endabschnitt 9 der ersten und zweiten Materialanordnung 6, 7, der mithin von der mit dem Behälter 1 zu verbindenden Fläche 10 des Flansches 4 abgekehrt ist. Die Materialanordnungen 6, 7 und 8 können wiederum eine Schmelzverbindung miteinander eingehen.

Die Herstellung dieses Stutzens geschieht wiederum in der Weise, daß in einem ersten Schritt die erste Materialanordnung 6, d.h. die äußere oder innere oder beide, im Extrusions- oder Spritzgußverfahren zu einer ebenen Folie oder Platte oder zu einem Schlauch geformt wird. In einem zweiten Schritt wird die Folie oder Platte wiederum durch Tiefziehen oder der Schlauch durch Blasformen zu einem Vorformling geformt, der die in Fig. 12 dargestellte, abgewinkelte Form aufweist. Allerdings müssen zumindest die Übergänge der Materialanordnung 6 bzw. des aus ihr gebildeten Vorformlings nicht winklig in den Endabschnitt 9 übergehen. Die Übergänge können auch rund sein.

In einem dritten Schritt wird die zweite Materialanordnung 7 auf der einen Seite des aus der äußeren oder inneren Materialanordnung 6 oder aus beiden gebildeten Vorformlings im Spritzgußverfahren aufgebracht (hinterspritzt). In einem vierten Schritt wird die dritte Materialanordnung 8 um den Endabschnitt 9 der ersten und zweiten Materialanordnung 6, 7 im Spritzgußverfahren im Bereich des Flansches 4 herumgespritzt. Dabei wird auch ein nicht von der Materialanordnung 6 abgedeckter Teil 11 der zweiten Materialanordnung 7 durch die dritte Materialanordnung 8 abgedeckt. Im Falle des aus der Folie oder Platte gebildeten Vorformlings wird dessen Boden vor, in oder nach dem dritten Schritt herausgeschnitten.

Die erste Materialanordnung 6 weist eine Diffusionssperrschicht, die zweite Materialanordnung 7 Polyethylen (PE) und die dritte Materialanordnung 8 ebenfalls eine Diffusionssperrschicht für Kohlenwasserstoffe auf. Bei den diffusionssperrfähigen Materialien kann es sich ebenfalls um die im Zusammenhang mit den vorhergehenden Ausführungsbeispielen geschilderten Materialien handeln. Vorzugsweise ist es PA oder EVOH.

Die erste Materialanordnung 6 und die dritte Materialanordnung 8 enthalten elektrisch leitfähige Teilchen, z.B. Teilchen aus Metall, Graphit oder Kohlenstoff. Da die erste Materialanordnung 6 und die dritte Materialanordnung 8 miteinander in Berührung stehen, ergibt sich eine über die gesamte Länge des Stutzens leitfähige Schicht zur Verhinderung einer elektrostatischen Aufladung des Stutzens.

Statt einschichtig kann die erste Materialanordnung 6 bzw. ihre Folie oder Platte im ersten Schritt auch im Koextrusionsverfahren mehrschichtig hergestellt werden, wobei wenigstens eine der Schichten elektrisch leitfähig ist.

Sofern die erste Materialanordnung 6, wie dargestellt, sowohl die radial äußere als auch die radial innere Seite der zweiten Materialanordnung 7 abdeckt, ist das weitgehend nicht diffusionssperrfähige PE der zweiten Materialanordnung 7 durch eine doppelte diffusionssperrfähige Schicht abgedeckt. Dagegen kann die dickere zweite Materialanordnung 7 über die große ringförmige Fläche 10 mit der ebenfalls PE aufweisenden zumindest äußeren Schicht des Behälters 3 eine mechanisch hoch belastbare, feste Schmelzverbindung durch Verschweißen eingehen.

Eine weitere Alternative kann darin bestehen, daß in die zweite Materialanordnung 7, noch bevor sie vollständig ausgehärtet ist, eine weitere Schicht im Koinjektions- oder Monosandwich-Verfahren eingespritzt wird.

Bei dem Ausführungsbeispiel des Stutzens nach Fig. 13, von dem wiederum nur die eine in bezug auf die strichpunktiert dargestellte Mittellinie achsensymmetrische Hälfte dargestellt ist, liegt die dünnere Materialanordnung 6 innen und die dickere Materialanordnung 7 außen. Obwohl die Materialanordnung 6 etwa halb so dick wie die Materialanordnung 7 ist, kann sie auch sehr viel dünner sein. Sie könnte auch etwas dicker als dargestellt sein, sollte aber jedenfalls dünner als 70° der Dicke der Materialanordnung 7 sein.

Die Materialanordnung 6 weist überwiegend einen der erwähnten, gegenüber Kohlenwasserstoffen, wie Benzin oder Dieselöl, diffusionssperrfähigen Kunststoff auf und enthält einen elektrisch leitfähigen Zusatz. Bei dem Zusatz kann es sich um Teilchen aus Graphit, Metall oder Kohlenstoff, zum Beispiel Ruß, oder um sogenannte elektrisch leitfähige Nano-Röhrchen handeln. Nano-Röhrchen haben den Vorteil, daß sie ein verhältnismäßig großes Verhältnis von Länge zu Durchmesser von etwa 100 haben, so daß sie insgesamt mit ziemlicher Sicherheit eine über die gesamte Länge der Materialanordnung 6 durchgehende elektrisch leitende Verbindung bilden. Die Menge des Zusatzes ist dabei so gewählt, daß der elektrische Widerstand der Materialanordnung 6 im Bereich von 100 Ω bis 10⁷ Ω, vorzugsweise etwa 1000 Ω bis 10000 Ω, liegt, so daß sich die Materialanordnung 6 nicht beim Befüllen des Behälters 1 elektrostatisch auflädt.

Die Materialanordnung 7 enthält überwiegend PE, das im Gegensatz zu den diffusionssperrfähigen Kunststoffen mit dem HDPE des Behälters 1 eine Schmelzverbindung eingeht.

Wenigstens eine der beiden Materialanordnungen 6 und 7 ist haftungsmodifiziert, so daß sie ebenfalls eine Schmelzverbindung miteinander eingehen. Wenn der diffusionssperrfähige Kunststoff der Materialanordnung 6 in der Weise haftungsmodifiziert ist, daß er mit dem PE der Materialanordnung 7 eine Schmelzverbindung eingeht, kann er auch mit dem HDPE des Behälters 1 eine Schmelzverbindung eingehen.

Bei der Herstellung des Stutzens nach Fig. 13 wird in einem ersten Schritt die dickere Materialanordnung 7 in einer ersten Formwerkzeugkavität in einen Vorformling mit der dargestellten Stutzenkontur geformt, d.h. mit einem längeren zylindrischen Abschnitt und dem Flansch 4. In einem zweiten Schritt wird dann die dünnere Materialanordnung 6 in einer zweiten Formwerkzeugkavität in die dargestellte Stutzenkontur geformt und gleichzeitig an den ersten Vorformling aus der Materialanordnung 7 angeformt, und zwar derart, daß die dünnere Materialanordnung 6 die dickere Materialanordnung 7 an deren gesamten Innenseite über das der mit dem Behälter 1 zu verbindenden Fläche 10 abgekehrte Ende der Materialanordnung 7 hinaus angeschmolzen und zu der über die Außenseite der Materialanordnung 7 hinausragenden Halterippe 5 geformt wird.

Über die konische Ringfläche der Halterippe 5 hinweg kann dann, nachdem der Stutzen an der Außenseite der Wand 2 des Behälters 1 im Bereich der Fläche 10, zum Beispiel durch Reib- oder Spiegelschweißen, angeschmolzen wurde, die Fluidleitung 12 in Form eines Schlauches bis hinter die Halterippe 5 auf den Stutzen geschoben und, wenn nötig, mit einer Schlauchschelle 13 festgeklemmt werden. Wenn die Fluidleitung 12 ebenfalls einen elektrisch leitfähigen Zusatz enthält, ist die gesamte Verbindung von einem an dem nicht dargestellten Ende der Fluidleitung 12 befestigten Einfüllstutzen aus über die Fluidleitung 12 und die Materialanordnung 6 bis zum Behälter 1 elektrisch leitfähig, so daß sie sich beim Befüllen des Behälters 1 nicht elektrostatisch aufladen kann. Wenn der Behälter 1 zusätzlich eine elektrisch leitende Schicht aufweist, die seine Öffnung 3 und seine Außenseite von der Öffnung bis zum inneren Rand der Fläche 10 abdeckt, reicht die leitende Verbindung auch bis in den Behälter 1. Diese leitende Schicht würde zwar eine Schmelzverbindung der Materialanordnung 6 mit dem Behälter 1 behindern oder verhindern. Wegen ihres elektrisch leitfähigen Zusatzes würde sich die Materialanordnung 6 jedoch auch ohne die leitfähige Schicht des Behälters 1 kaum mit diesem verbinden. Da die Materialanordnung 7 jedoch im Vergleich zur Materialanordnung 6 relativ dick ist, kann die großflächige Verbindung zwischen der Materialanordnung 7 und dem Behälter 1 im wesentlichen allein die Festigkeit der Verbindung zwischen Stutzen und Behälter 1 bestimmen. Aus dem gleichen Grunde ist die Materialanordnung 7 als Träger der dünnen Materialanordnung 6 allein in der Lage, eine hinreichende mechanische Festigkeit des Stutzens zu gewährleisten. Die elektrische Verbindung zwischen der Fluidleitung 12 und der Halterippe 5 der Materialanordnung 6 ermöglicht es ferner, die Materialanordnung 7 von einem elektrisch leitenden, die Schmelzverbindung zwischen der Materialanordnung 7 und dem Behälter 1 zumindest beeinträchtigenden Zusatz frei zu halten.

Grundsätzlich wäre es aber auch möglich, die Materialanordnung 7 dünner als die Materialanordnung 6 und im wesentlichen aus einem diffusionssperrfähigen Kunststoff, mit einem elektrisch leitenden Zusatz, dagegen die Materialanordnung 6 sehr viel dicker als die Materialanordnung 7 im wesentlichen aus einem mit dem Kunststoff des Behälters 1 verschmelzbaren Kunststoff auszubilden, ohne daß sich die Gesamtkontur des Stutzens dadurch ändern würde. Die elektrisch leitfähige Verbindung würde dann über die Materialanordnung 7 bis zum Behälter 1 führen. Bei dieser Abwandlung wäre lediglich eine leitfähige Schicht des Behälters 1 von seiner Öffnung 3 unter dem behälterseitigen Rand der Materialanordnung 6 hindurch bis an oder unter den behälterseitigen Rand der Materialanordnung 7 nicht ratsam, weil sich dann die Materialanordnung 6 schlecht mit dem Behälter 1 verbinden würde. Die Reihenfolge der Herstellung der Vorformlinge aus den Materialanordnungen 6 und 7 wäre dann lediglich umgekehrt: Im ersten Schritt würde der Vorformling aus der Materialanordnung 6 und im zweiten Schritt der Vorformling aus der Materialanordnung 7 geformt und gleichzeitig an die Materialanordnung 6 angeschmolzen, d.h. im noch geschmolzenen Zustand angeformt.

Das Ausführungsbeispiel des Stutzens nach Fig. 14 - der Behälter 1 und die Fluidleitung 12 sind in dieser Darstellung weggelassen - unterscheidet sich von dem nach Fig. 13 nur dadurch, daß die dünnere Materialanordnung 6, bis auf eine innere erste Schicht 6c, aus dem gleichen Material wie die dickere Materialanordnung 7 geformt und in den im Inneren, durch das Spritzgießen noch geschmolzenen Bereich der Materialanordnung 6 von deren spitzen Ende her die Schicht 6c aus einem der erwähnten diffusionssperrfähigen Kunststoffe, vorzugsweise PA oder EVOH, im Koinjektions- oder Monosandwich-Verfahren eingespritzt wird. Dabei bilden die Schichten 6a und 6b eine Hautschicht, und die Schicht 6c eine sich über die gesamte Länge des Stutzens erstreckende, dünnere Kernschicht des zweiten Vorformlings. Die Hautschicht ist wiederum mit einem elektrisch leitfähigen Zusatz versehen, während die innere Schicht 6c ebenfalls mit einem leitfähigen Zusatz versehen sein kann und haftungsmodifiziert ist, so daß sie mit dem PE der Hautschicht 6a, 6b eine Schmelzverbindung eingeht.

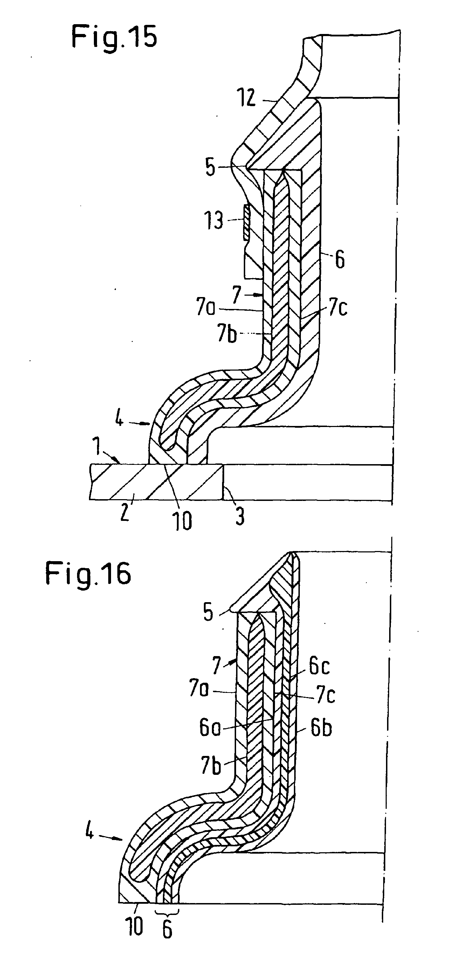

Das Ausführungsbeispiel des Stutzens nach Fig. 15 unterscheidet sich von dem nach Fig. 13 nur dadurch, daß in die Materialanordnung 7 während des ersten Schrittes eine erste Schicht 7b aus einem der erwähnten diffusionssperrfähigen Kunststoffe, vorzugsweise PA oder EVOH, im Koinjektions- oder Mönosandwich-Verfahren eingespritzt ist. Dabei erstreckt sich die Schicht 7b von dem Ende der Materialanordnung 7, das dem am Behälter 1 anzuschweißenden Ende abgekehrt ist und den Anguß bildet, über mehr als 50%, vorzugsweise mehr als 90% und weniger als 100% der Länge des Stutzens, bis in den Flansch 4, also nicht bis an das anzuschweißende Ende, so daß das PE der Materialanordnung 7 weiterhin mit der Fläche 10 am Behälter 1 beim Anschweißen eine feste Schmelzverbindung eingehen kann. Bei dieser Ausbildung braucht die Schicht 7b an sich keine Schmelzverbindung mit dem PE der (Haut-)Schichten 7a, 7c der Materialanordnung 7 einzugehen, weil sie vollständig von den Schichten 7a, 7c der Materialanordnung 7 umhüllt ist. Da die Materialanordnung 6 bereits einen diffusionssperrfähigen Kunststoff aufweist, kann die Schicht 7b alternativ einen anderen thermoplastischen Kunststoff aufweisen, der nicht diffusionssperrfähig ist, aber die mechanische Festigkeit der Materialanordnung 7 erhöht. Insbesondere kann sie ein Verstärkungsmaterial enthalten, z.B. Glasfasern oder Kohlefasern.

Bei dem Ausführungsbeispiel des Stutzens nach Fig. 16 ist die Materialanordnung 6 aus den gleichen Schichten 6a bis 6c, im gleichen Schritt und aus den gleichen Materialien wie die Materialanordnung 6 nach Fig. 14 ausgebildet, während die Materialanordnung 7 bei dem Ausführungsbeispiel nach Fig. 16 ebenso ausgebildet ist wie die Materialanordnung 7 des Ausführungsbeispiels nach Fig. 15.

Alternativ können die Materialanordnungen 6 und 7 bei den Ausführungsbeispielen nach den Fig. 14 bis 16 wenigstens noch eine weitere im Koinjektions- oder Monosandwich-Verfahren eingespritzte Schicht aufweisen.

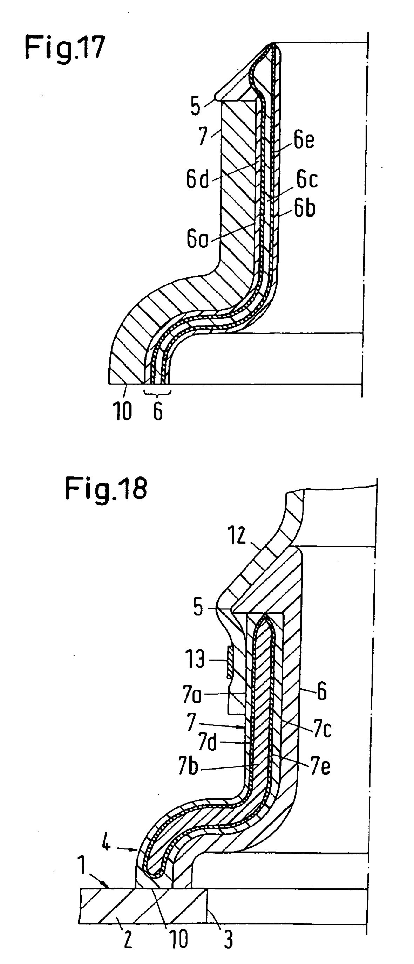

Das Ausführungsbeispiel des Stutzens nach Fig. 17 unterscheidet sich von dem nach Fig. 13 im wesentlichen darin, daß beide Materialanordnungen 6 und 7 bei der Herstellung des Stutzen - abgesehen von dem leitfähigen Zusatz, im vorliegenden Fall Ruß, in der Materialanordnung 6 - zunächst PE aufweisen und während des Spritzens der Materialanordnung 6 in ihren noch geschmolzenen Kern (die "Seele"), während die aus den Schichten 6a und 6b bestehende Haut schon weitgehend ausgehärtet ist, von der am spitzen Ende des Stutzens liegenden Einspritzstelle her eine erste Schicht 6d, 6e im Koinjektions- oder Monosandwich-Verfahren eingespritzt wird. Die erste Schicht 6d, 6e weist ein mit Maleinsäureanhydrid gepfropftes PE auf. Dadurch ist die Schicht 6d, 6e gegenüber einem für Kohlenwasserstoffe, wie Benzin oder Dieselöl, diffusionsperrfähigen PA oder EVOH haftungsmodifiziert.

In den Kern der ersten Schicht 6d, 6e wird dann, nachdem deren Hautschichten 6d und 6e weitgehend ausgehärtet sind, aber ihr Kern noch geschmolzen ist, ein zweite Schicht 6c im Koinjektions- oder Monosandwich-Verfahren eingespritzt. Diese Schicht 6c weist ein PA oder EVOH auf. Wenn PA als Schicht 6c eingespritzt wird, wird dessen Aminoendgruppenkonzentration gleich oder größer als 40 Milliäquivalent pro Kilogramm gewählt. Dadurch geht die Schicht 6d, 6e nicht nur mit dem PE der Materialanordnung 6, sondern auch mit der Schicht 6c eine feste stoffschlüssige Schmelzverbindung ein. Da der Behälter 1 PE oder HDPE und die Materialanordnung 7 ebenfalls PE aufweist, gehen beide weiterhin eine feste stoffschlüssige Schmelzverbindung miteinander ein, wenn der Stutzen am Behälter 1 angeschweißt wird. Da die Materialanordnung 6 in den Schichten 6a und 6b einen leitfähigen Zusatz aufweist, geht sie mit dem Behälter 1 keine sehr feste Schmelzverbindung ein. Insbesondere geht sie mit dem Behälter 1 keine Schmelzverbindung ein, wenn er einen leitfähigen Überzug aufweist, der die Öffnung 3 des Behälters 1 und dessen Außenseite von der Öffnung 3 bis zum radial äußeren Rand des dem Behälter 1 zugekehrten Endes der Materialanordnung 6 abdeckt, wobei eine durchgehend leitfähige Verbindung von der in Fig. 17 nicht dargestellten Fluidleitung 12 über die Schicht 6a, 6b bis in den Behälter 1 entsteht. Auch wenn die Aminoendgruppenkonzentration der PA-Schicht 6c gleich oder größer als 40 Milliäquivalent pro Kilogramm gewählt wird, geht sie mit dem (HD)PE des Behälters keine Schmelzverbindung ein. Jedoch ist die Verbindung zwischen dem PA der Schicht 6c und den PE-Schichten 6a und 6b fester, wenn die haftungsmodifizierten Schichten 6d und 6e vorgesehen sind. Insgesamt ergibt sich dennoch durch die dickere Materialanordnung 7 eine sehr feste Verbindung zwischen dem Stutzen und dem Behälter 1.

Obwohl die diffusionssperrfähige Schicht 6c in der Materialanordnung 6 von den Schichten 6a und 6b eingeschlossen ist, ist es dennoch vorteilhaft, sie mit diesen Schichten 6a und 6b zu verschmelzen und dadurch zu verbinden. Denn es wäre möglich, daß Benzin oder Dieselöl durch die Schicht 6b zwischen diese und die Schicht 6c hindurchdiffundiert und durch den Diffusions- und/oder Dampfdruck - letzteres insbesondere bei höheren Temperaturen - des hindurchdiffundierenden Kraftstoffs und durch das unterschiedliche Quellverhalten von PE und PA (PE quillt stärker als PA) die Schicht 6b von der Schicht 6c abhebt.

Zwar wäre es möglich, die Schichten 6a und 6b mit Maleinsäureanhydrid zu modifizieren, so daß die erste Schicht 6d, 6e entfallen könnte. Nicht mit Maleinsäureanhydrid haftungsmodifiziertes PE, wie das der Schichten 6a und 6b, hat jedoch den Vorteil, daß es leichter durch einen elektrisch leitfähigen Zusatz, wie Ruß, leitfähig ausgebildet werden kann als ein mit Maleinsäureanhydrid haftungsmodifiziertes PE.

Das Ausführungsbeispiel des Stutzens nach Fig. 18 unterschiedet sich von dem nach den Fig. 15 und 17 dadurch, daß die erste Schicht 7d, 7e und die in diese eingespritzte diffusionssperrfähige zweite Schicht 7b in die Materialanordnung 7 eingespritzt sind. Die erste Schicht 7d, 7e weist mithin dasselbe Material wie die erste Schicht 6d, 6e nach Fig. 17 und die diffusionssperrfähige Schicht 7b dasselbe Material wie die zweite Schicht 6c gemäß Fig. 17 auf. In diesem Fall ist die radial äußere Hautschicht 7a der Materialanordnung 7 zusätzlich durch die Haftungsmodifizierte Schicht 7d, 7e gegen ein Abheben oder Ablösen von der diffusionsperrfähigen Schicht 7b aufgrund äußerer mechanischer Kräfte, zum Beispiel Reibungskräfte, die auf die Schicht 7a einwirken, geschützt.

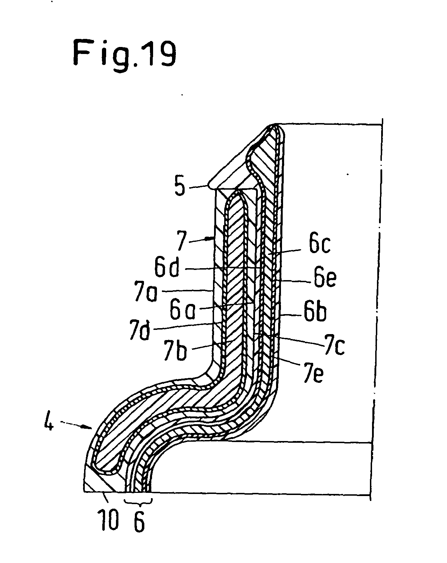

Das Ausführungsbeispiel des Stutzens nach Fig. 19 stellt eine Kombination der Schichten der Materialanordnung 6 nach Fig. 17 mit den Schichten der Materialanordnung 7 nach Fig. 18 dar. Es vereinigt mithin die Vorteile beider Ausführungsbeispiele nach den Fig. 17 und 18 und erhöht die Diffusionssperrfähigkeit durch die Verwendung zweier diffusionssperrfähiger Schichten, daß heißt der beiden Schichten 6c und 7b.

In Fällen, in denen keine sehr hohen Anforderungen an die Diffusionssperrfähigkeit des Stutzens gestellt werden, können beide Materialanordnungen aus Kunststoffen bestehen, die nicht nur miteinander, sondern auch mit dem Behälter 1 eine stoffschlüssige Schmelzverbindung eingehen, wobei dann wiederum nur die eine Materialanordnung, vorzugsweise die radial innere Materialanordnung, die dünner als die radial äußere Materialanordnung 7 ist, den elektrisch leitfähigen Zusatz aufzuweisen braucht. Wenn der Behälter 1 PE oder HDPE aufweist, können beide Materialanordnungen 6 und 7 ebenfalls PE aufweisen.

Da nur die eine Materialanordnung 6 den leitfähigen Zusatz aufweist, kann dann der gesamte Stutzen trotz des die Materialkosten erhöhenden leitfähigen Zusatzes kostengünstiger als bei einschichtiger Ausbildung des gesamten Stutzens mit einem leitfähigen Zusatz hergestellt werden. Die Materialanordnung 7 hat dann wegen des fehlenden leitfähigen Zusatzes eine höhere Chemikalienbeständigkeit und Spannungsrißbeständigkeit. Da beide Materialanordnungen 6 und 7 auch mit dem Behälter eine stoffschlüssige Schmelzverbindung eingehen, kann der geschmolzene Kunststoff der leitfähigen Materialanordnung 6 nicht zwischen die Materialanordnung 7 und den Behälter 1 eindringen und deren Verbindung mit dem Behälter 1 beeinträchtigen.

## Patentansprüche

1. Verfahren zur Herstellung eines Stutzens zum Verbinden einer Fluidleitung mit einem Behälter (1) aus thermoplastischem Kunststoff, wobei der Stutzen eine erste stutzenförmige, dreischichtige Materialanordnung (6) aufweist, die im Koinjektions- oder Monosandwich-Verfahren zumindest überwiegend aus thermoplastischem Material hergestellt wird, wobei die Hautschicht (6a, 6b) der ersten Materialanordnung (6) mit einer zweiten Materialanordnung (7), die zumindest überwiegend aus thermoplastischem Material besteht, das mit der Hautschicht (6a, 6b) der ersten Materialanordnung (6) eine Schmelzverbindung eingeht, verschmolzen wird **dadurch gekennzeichnet, daß** die zweite Materialanordnung (7) auf der ersten Materialanordnung im Spritzgußverfahren aufgebracht wird oder die erste Materialanordnung (6) als Vorformling in einem Formwerkzeug angeordnet wird, daß eine dritte Materialanordnung (8) dreischichtig im Koinjektions- oder Monosandwich-Verfahren zumindest überwiegend aus thermoplastischem Kunststoff hergestellt und in dem Formwerkzeug als zweiter Vorformling mit einem Zwischenraum zum ersten Vorformling angeordnet wird und daß die zweite Materialanordnung (7) in den Zwischenraum gespritzt wird und mit den Hautschichten beider Vorformlinge eine Schmelzverbindung eingeht.

2. Verfahren nach Anspruch 1, **dadurch gekennzeichnet, daß** die zweite Materialanordnung (7) einschichtig ist, überwiegend PE oder PA aufweist und weitgehend die gleiche Dicke wie die beiden Vorformlinge zusammen aufweist oder dicker ist.

3. Verfahren nach Anspruch 1, **dadurch gekennzeichnet, daß** die zweite Materialanordnung (7) dreischichtig im Koinjektions- oder Monosandwich-Verfahren ausgebildet wird und ihre Hautschichten (7a, 7c) mit den Hautschichten (6b, 8c) der beiden Vorformlinge eine Schmelzverbindung eingehen.

4. Verfahren nach einem der Ansprüche 1 bis 3, **dadurch gekennzeichnet, daß** die Hautschichten (6a, 6b, 7a, 7c) der ersten Materialanordnung (6) und/oder der zweiten Materialanordnung (7) ein PE und ihre Kernschicht (6c, 7b) eine Diffusionssperrschicht für Kohlenwasserstoffe aufweist, und insbesondere bei der zweiten Materialanordnung (7) Verstärkungsmaterial PA oder EVOH aufweist.

5. Verfahren nach Anspruch 4, **dadurch gekennzeichnet, daß** die Kernschicht der zweiten Materialanordnung (7) weitgehend die gleiche Dicke wie ihre beiden Hautschichten (7a, 7c) zusammen aufweist oder dicker ist.

## Claims

1. A method for producing a socket for connecting a fluid conduit to a container (1) made from thermoplastic synthetic material, wherein the socket has a first socket-shaped three-layer material arrangement (6) produced by coinjection or a monosandwich process at least predominantly from thermoplastic material, wherein a skin layer (6a, 6b) of the first material arrangement is fused to a second material arrangement (7) consisting at least predominantly of thermoplastic material which forms a fused joint with the first material arrangement, **characterized in that** the second material arrangement (7) is applied by injection molding onto the first material arrangement or that the first material arrangement is arranged in a mold as a first preform, that a third material arrangement (8) having three layers is produced by coinjection or a monosandwich process predominantly of thermoplastic synthetic material and is arranged as a second preform in the mold so that an intermediate space is created between the first and second preforms, and that the second material arrangement is injected into the intermediate space, wherein the second material arrangement (7) forms a fused joint with the skin layers of the first and second preforms.

2. The method according to claim 1, **characterized in that** the second material arrangement (7) is a single layer and comprises predominantly PE or PA and has a thickness that is substantially identical to or thicker than a combined thickness of the first and second preforms.

3. The method according to claim 1, **characterized in that** the second material arrangement (7) is formed of three layers that are coinjected or produced by a monosandwich process, wherein their skin layers (7a, 7c) fuse to the skin layers (6b, 8c) of the first and second preforms.

4. The method according to at least one of the claims 1 to 3, **characterized in that** the skin layers (6a, 6b, 7a, 7c) of the first material arrangement and/or of the second material arrangement (7) comprise PE and their core layer (6c, 7b) comprises a diffusion barrier for hydrocarbons, and comprises in particular in the second material arrangement (7) reinforcing material like PA or EVOH.

5. The method according to claim 4, **characterized in that** the core layer of the second material arrangement (7) has a thickness that is substantially identical to or thicker than a combined thickness of the skin layers (7a, 7c) of the second material arrangement.

## Revendications

1. Procédé pour la fabrication d'une pipe destinée à la liaison d'une conduite à fluide avec un récipient (1) en matière thermoplastique, dans lequel la pipe comprend un premier agencement de matières (6) à trois couches en forme de pipe, qui est fabriqué au moins en majeure partie en matière thermoplastique dans un procédé par coinjection ou un procédé "monosandwich", dans lequel la couche extérieure (6a, 6b) du premier agencement de matières (6) est assemblée par fusion avec un second agencement de matières (7), lequel est constitué au moins en majeure partie en une matière thermoplastique qui établit une liaison par fusion avec le premier agencement de matières (6), en ce que le second agencement de matières (7) est apporté sur le premier agencement de matières selon un processus de coulée par injection ou bien en ce que le premier agencement de matières (6) est agencé sous forme d'ébauche dans un outil de moulage, en ce qu'un troisième agencement de matières (8) au moins en majeure partie en matière thermoplastique est fabriqué en trois couches dans un procédé par coinjection ou un procédé "monosandwich" et est agencé dans l'outil de moulage sous forme de seconde ébauche avec un espace intermédiaire vis-à-vis de la première ébauche, et en ce que le second agencement de matières (7) est injecté dans l'espace intermédiaire et établit une liaison par fusion avec les couches extérieures des deux ébauches.

2. Procédé selon la revendication 1, **caractérisé en ce que** le second agencement de matières (7) est monocouche, comprend principalement du PE ou du PA, et présente largement la même épaisseur que les deux ébauches ensemble ou bien est plus épais.

3. Procédé selon la revendication 1, **caractérisé en ce que** le second agencement de matières (7) est réalisé à trois couches par un procédé de coinjection ou par un procédé "monosandwich" et ses couches extérieures (7a, 7c) établissent une liaison par fusion avec les couches extérieures (6b, 8c) des deux ébauches.

4. Procédé selon l'une des revendications 1 à 3, **caractérisé en ce que** les couches extérieures (6a, 6b, 7a, 7c) du premier agencement de matières (6) et/ou du second agencement de matières (7) comprend un PE et sa couche centrale (6c, 7b) comprend une couche de barrière antidiffusion pour les hydrocarbures, et **en ce que** le second agencement de matières (7) comprend en particulier du PA ou EVOH à titre de matériau de renforcement.

5. Procédé selon la revendication 4, **caractérisé en ce que** la couche centrale du second agencement de matières (7) présente largement la même épaisseur que ces deux couches extérieures (7a, 7c) ensemble ou bien est plus épaisse.
